# EUROPEAN PATENT APPLICATION

(11) **EP 1 655 894 A1**
(43) Date of publication of application: **10.05.2006**
(21) Application number: 04292625.3
(22) Date of filing: 05.11.2004
(51) Int. Cl.: H04L 12/28

(54) **A method of enabling an emergency call in a wireless local area network according to IEEE 802.11e**

(71) Applicant: ALCATEL, 75008 Paris (FR)
(72) Inventor: Conte, Alberto, 75014 Paris (FR); Dauchy, Philippe, 75014 Paris (FR)
(74) Representative: Richardt, Markus Albert

(57) **Abstract**

The present invention is based on inserting an additional information into the admission control requests (7,8) defined in IEEE 802.11 e in order to identify and differentiate the requests (7,8) related to emergency calls. By doing this, the entity entitled to perform the admission control, i.e. the central controller (3), or, in other words, the entity entitled to decide whether there are enough network resources for a requested call to be established, can handle a resource request for an emergency call in a well adapted way.

## Description

### Field of the invention

The invention relates to a method of enabling an emergency call in an IEEE 802.11e enabled wireless local area network. It further relates to computer program products, a user terminal, a central controller and a telecommunication system for transmitting calls over an IEEE 802.11 e enabled wireless local area network.

### Background and prior art

The IEEE 802.11 standards standardize wireless local area networks (WLAN). The technical draft IEEE 802.11e has the objective to improve the IEEE 802.11 a, b and g performances and to enhance the ability of the 802.11 medium access control (MAC) to deliver time-critical multimedia data in addition to traditional data packets. Improved bandwidth management and new error-protection functionalities are proposed in IEEE 802.11e by the following enhancements: 802.11e defines the Hybrid Coordination Function (HCF) which includes two access techniques operating concurrently: the Enhanced Distributed Channel Access (EDCA), providing contention-based access, and the HCF controlled channel access (HCCA), providing centrally controlled contention-free access using polling.

IEEE 802.11e especially provides quality of service (QoS) capabilities to WLAN systems by supporting: traffic differentiation (EDCA mechanism), time-division multiplexing (HCCA mechanism), and means to request, release and modify network resources and perform admission control on them.

Important applications for IEEE 802.11e are voice over internet provider (VolP) telephony and video streaming that both need not so much a large bandwidth, but more a reliable connection. The set of 802.11 e tools promises to ease the deployment of QoS-sensitive real-time and interactive services like needed for VolP telephony and video streaming.

The deployment of VolP telephony, either in private networks, where e.g. DECT systems are replaces in companies' networks, or in public networks, e.g. when extending GPRS and UMTS networks, has to satisfy a certain number of mandatory governmental requirements. One of these requirements is the support of emergency calls.

The support of emergency calls should make sure that emergency calls are treated with higher priority than non-emergency calls. Moreover, if no more network resources are available to support the emergency call, one or more non-emergency calls should be preempted or released in order to provide the necessary resources to establish the emergency call.

Currently, IEEE 802.11 e does not include the support of emergency calls: Emergency calls are treated exactly like non-emergency calls, without any supplemental priority.

It is an object of the present invention to provide a possibility of supporting emergency calls in IEEE 802.11e enabled WLANs.

This object is achieved by a method of enabling an emergency call in an IEEE 802.11e enabled wireless local area network according to claim 1, computer program products according to claims 6 and 7, a user terminal according to claim 8, a central controller according to claim 9 and a telecommunication system for transmitting calls over an IEEE 802.11e enabled wireless local area network. Preferred embodiments are described in the dependent claims.

### Summary of the invention

The present invention is based on inserting an additional information into the admission control requests defined in IEEE 802.11e in order to identify and differentiate the requests related to emergency calls. By doing this, the entity entitled to perform the admission control, i.e. the central controller, or, in other words, the entity entitled to decide whether there are enough network resources for a requested call to be established, can handle a resource request for an emergency call in a well adapted way, establishing the emergency call with a higher priority than a non-emergency call by, for example preempting existing non-emergency calls etc., depending on the defined policy.

The present invention enables the support of emergency calls by integrating it in the admission control mechanism defined by IEEE 802.11e. This has the major advantage, that the solution proposed according to the present invention smoothly integrates with the IEEE 802.11e standard mechanism of add traffic stream message (ADDTS) requests and responses.

There are two preferred approaches for adding an identifier to a request for resource message.

The first approach consists in setting an EMERGENCY flag as identifier in the request for resource message. Preferably, an EMERGENCY field is added to the traffic specification element (TSPEC) that is sent with the request for resource message according to IEEE 802.11e. This field can contain a flag identifying the call to be established as emergency call. The advantage of this first approach is, that it works both with the EDCA mechanism and the HCCA mechanism.

The second approach consists in defining a specific class of traffic for emergency calls, this class of traffic having a higher priority then non-emergency calls. The information on the traffic class is sent with the request for resources message. Preferably, the specific class of traffic is specified in a field of the item TS Info of the TSPEC to be sent with the request for resources message. Most preferably, the field TSID of TS Info is used for this purpose. The advantage of this second approach is that it is adapted to the EDCA mechanism, which is supposed to be implemented in the first generation IEEE 802.11e equipment. This second approach allows for proprietary solutions without further standardization efforts. But they can still interact with non-proprietary terminals, where the emergency call would be treated like non-emergency calls.

A detailed description of the invention is provided below. Said description is provided by way of a non-limiting example to be read with reference to the attached drawings in which:

### Brief description of the drawings

- Figure 1: is a block diagram illustrating an embodiment of the present invention;
- Figure 2a: shows the structure of TSPEC; and
- Figure 2b: shows the structure of TS Info.

### Detailed description

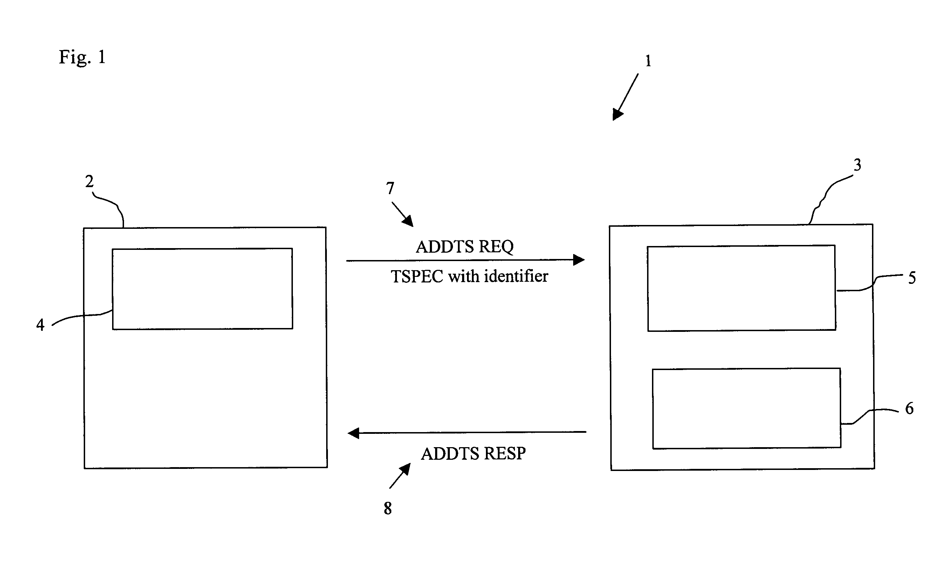

Figure 1 shows an example for an embodiment of the present invention. A telecommunication system 1 for transmitting calls over an IEEE 802.11e enabled WLAN comprises means 4 for generating a request for resource message, means 5 for decoding a request for resource message, and means 6 for allocating resources. The means 4 for generating a request for resource message is part of a user terminal 2, and is arranged to add to the request for resource message an identifier identifying the call to be established as emergency call. The means 5 for decoding a request for resource message and means 6 for establishing a call are part of a central controller 3 in charge of performing admission control, in this example an access point 3. The means 5 for decoding a request for resource message is arranged to detect in a request for resource message an identifier identifying the call to be established as emergency call. The means 6 for allocating resources is arranged for treating a request for resource message concerning an emergency call with higher priority than one concerning a non-emergency call and for allocating the resources needed, thus leading to establishing the emergency call with higher priority. Means for actually establishing a call may be collocated with the allocating means 6 or may be located in another entity than the central controller 3.

The means 4, 5, 6 can be hardware implemented, software implemented and then being part of a computer program product, or partly hardware, partly software implemented.

The admission control mechanism according to IEEE 802.11e works as follows: When a user terminal 2 wishes to start a call or a traffic stream requiring QoS, it sends a ADDTS REQ as request for resource message (numeral 7). The ADDTS REQ indicates the chosen access policy, EDCA or HCCA, and contains the TSPEC parameters specifying the needs for the call to be established. The access point 3 or another central controller then checks, whether there are enough resources for the call according to TSPEC and sends back the result as ADDTS RESP (numeral 8). If the resources are available, the ADDTS RESP carries an affirmative response and resources needed for the call are allocated. Otherwise, the ADDTS RESP carries a REJECTED indication.

IEEE 802.11e has two MAC mechanisms, EDCA and HCCA. EDCA is a contention-based channel access. It introduces differentiation between different types of traffic (≤ 4), called access categories. The service offered by EDCA is a DiffServ (differentiated services)-like differentiation where high-priority traffic gets better service than low-priority traffic. EDCA enabled terminals and access points achieve traffic differentiation by implementing up to four MAC-layer transmission queues, each corresponding to a certain Access Category. Within a single station, the transmission queues behave as virtual stations, in the sense that each queue contends for the channel independently by using its own instance of the CSMA/CA (carrier sense multiple access/collision avoidance) protocol.

HCCA is a centrally controlled poll-and-response channel access using a QoS-aware centralized coordinator, called hybrid coordinator (HC). The HC is collocated with the QoS access point and it cyclically polls the user terminals having requested radio resources for transmission. The service offered by HCCA is a TDMA(time division multiple access)-like service.

According to the present invention, the ADDTS REQ from the user terminal 2 of the telecommunication system 1 contains additionally an identifier, identifying the call to be established as emergency call. According to the example shown in Figure 1, this identifier is contained in TSPEC. Upon reception of the ADDTS, the access point 3 recognizes this identifier and knows that it is an emergency call that is to be established. The access point 3 will then treat the ADDTS REQ with higher priority than a ADDTS REQ without identifier or negative identifier and allocate the resources needed, eventually pre-empting non-emergency calls.

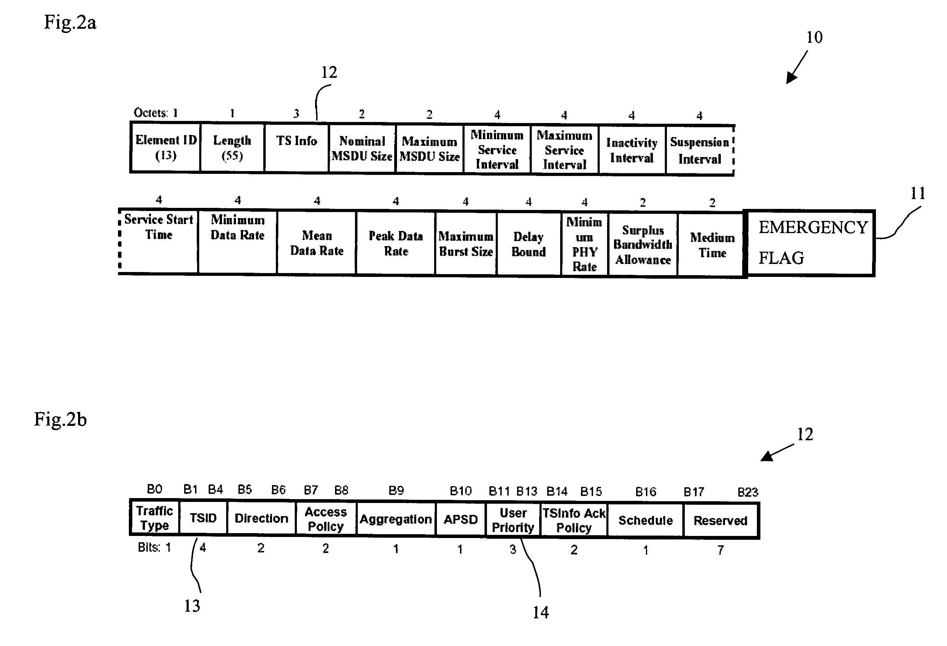

Figure 2a shows the structure of TSPEC 10 as defined in IEEE 802.11e and with an additional field 11 for an emergency flag indicating that the call to be established is an emergency call. Other than the standard fields that got 1 to 4 octets allocated, in preferred embodiments, only one bit would be enough for the emergency flag field 11.

This bit would be set, if it were an emergency call. In the example shown in Figure 2a, the emergency flag field 11 has been appended at the end of TSPEC 10, but the emergency flag field 11 could be inserted anywhere in TSPEC 10, preferably somewhere after the field TS Info 12, because, unless indicated otherwise, for fields following the TS Info field 12, the fields are set to zero for any unspecified parameter values. User terminals set the value of any parameter to unspecified, if the have no information for setting that parameter.

A modified TSPEC 10 as shown in Figure 2a could be interpreted by the access point 3 independently of which MAC mechanism is used, EDCA or HCCA, thus allowing support of emergency call in IEEE 802.11e enabled WLANs.

In preferred embodiments optimized for EDCA, it is advantageous to define an additional access category for emergency calls having a higher priority than non-emergency calls. In accordance with the EDCA mechanism, this additional access category is encoded in TSPEC, namely in the field TS Info 12 of TSPEC. The structure of the field TS Info 12 is illustrated in Figure 2b. Preferably, the information on the access category of the call to be established is encoded in the four bits field 13 called TSID. It could also be encoded in the three bits field 14 called user priority. By proceeding like explained, the identifier according to the invention is embedded into the EDCA mechanism of IEEE 802.11e. This allows for the support of emergency calls in IEEE 802.11e enabled WLANs.

Although having described several preferred embodiments of the invention, those skilled in the art would appreciate that various changes, alterations, and substitutions can be made without departing from the spirit and concepts of the present invention. The invention is, therefore, claimed in any of its forms or modifications with the proper scope of the appended claims. For example various combinations of the features of the following dependent claims could be made with the features of the independent claim without departing from the scope of the present invention. Furthermore, any reference numerals in the claims shall not be construed as limiting scope.

### List of Reference Numerals

- 1: telecommunication system
- 2: user terminal
- 3: access point
- 4: generating means
- 5: decoding means
- 6: allocating means
- 7: sending ADDTS REQ
- 8: sending ADDTS RESP
- 10: TSPEC
- 11: EMERGENCY FLAG
- 12: TS Info
- 13: TSID
- 14: User Priority

## Claims

1. A method for enabling an emergency call in an IEEE 802.11e enabled wireless local area network, said method comprising the steps of:
- sending a request for resource message from a user terminal to a central controller upon request of a call establishment, wherein the request of resource message includes an identifier identifying the call to be established as emergency call;
- detecting at said central controller said identifier and treating said call establishment with higher priority than a non-emergency call establishment.

2. The method according to claim 1, wherein an emergency flag is set as identifier in the request for resource message.

3. The method according to claim 1 or 2, wherein an emergency field is added to a traffic specification element to be sent with the request for resource message, said emergency field containing a flag identifying the call to be established as emergency call.

4. The method according to claim 1, wherein a specific class of traffic is defined for emergency calls, said specific class of traffic having a higher priority than non-emergency calls, and wherein said specific class of traffic is specified as identifier in a request of resource message.

5. The method according to claim 4, wherein said specific class of traffic is specified in a field of the item TS Info of a traffic specification element to be sent with the request of resource message.

6. A computer program product, in particular a digital storage medium, comprising program means for generating a request for resource message, the program means being adapted for performing the step of adding to the request for resource message an identifier identifying the call to be established as emergency call.

7. A computer program product, in particular a digital storage medium, comprising program means for decoding a request for resource message and establishing a call, the program means being adapted to perform the steps of detecting in a request for resource message an identifier identifying a call to be established as emergency call, and of treating the establishment of an emergency call with higher priority than the establishment of a non-emergency call.

8. A user terminal (2) for making calls over an IEEE 802.11 e enabled wireless local area network, comprising means (4) for generating a request for resource message, said means (4) being arranged to add to the request for resource message an identifier identifying the call to be established as emergency call.

9. A central controller (3) for establishing calls in an IEEE 802.11e enabled wireless local area network, comprising means (5) for decoding a request for resource message and means (6) for allocating resources, the decoding means (5) being arranged to detect in a request for resource message an identifier identifying a call to be established as emergency call, and the allocating means (6) being arranged for treating a request for resource message concerning an emergency call with higher priority than one concerning a non-emergency call and for allocating the needed resources.

10. A telecommunication system (1) for transmitting calls over an IEEE 802.11e enabled wireless local area network, the telecommunication system (1) comprising:
- means (4) for generating a request for resource message, said means (4) being arranged to add to the request for resource message an identifier identifying the call to be established as emergency call;
- means (5) for decoding a request for resource message, said means (5) being arranged to detect in a request for resource message an identifier identifying a call to be established as emergency call;
- means (6) for allocating resources, said means (6) being arranged for treating a request for resource message concerning an emergency call with higher priority than one concerning a non-emergency call.
